# EUROPEAN PATENT APPLICATION

(11) **EP 1 892 782 A1**
(43) Date of publication of application: **27.02.2008**
(21) Application number: 07114649.2
(22) Date of filing: 21.08.2007
(51) Int. Cl.: H01M 8/02

(54) **Transition metal nitride, fuel cell separator, method for producing transition metal nitride, method for producing fuel cell separator, fuel cell stack, and fuel cell vehicle**

(30) Priority: 24.08.2006 JP 2006227674; 28.05.2007 JP 2007141024
(71) Applicant: Nissan Motor Co., Ltd., Kanagawa 221-0023 (JP)
(72) Inventor: Uchiyama, Noriko, Atsugi-shi Kanagawa 243-0192 (JP); Chiba, Nobutaka, Atsugi-shi Kanagawa 243-0192 (JP); Kano, Makoto, Atsugi-shi Kanagawa 243-0192 (JP)
(74) Representative: Holmes, Matthew William

(57) **Abstract**

A transition metal nitride comprises a first layer formed of a nitride of a steel containing at least Fe ad Cr and second layer formed on a first layer and having an exposed surface. The transition metal nitride has a composition distribution in which Cr concentration is continuously changed from the first layer to the second layer in a thickness direction of these layers. A fuel separator comprises a base layer formed of a stainless steel containing at least Fe and Cr and a nitride layer formed of a transition metal nitride as described. Methods of forming transition metal nitrides and fuel cell separators are also included, as is a fuel cell vehicle including a fuel cell stack.

## Description

The invention relates generally to fuel cell separators and particularly, but not exclusively, to fuel cell separators having improved corrosion resistance and electrical conductivity. Aspects of the invention relate to a transition metal nitride, to a fuel cell separator, to a method for producing the transition metal nitride, to a method for producing the fuel cell separator, to a fuel cell stack and to a fuel cell vehicle.

From the viewpoint of global environmental protection, it has been studied to use a fuel cell substituted in place of an internal combustion engine of a vehicle as a power supply for a motor and to drive the vehicle by means of the motor. Fuel cells do not require a fossil fuel that bears a depletion problem, and therefore do not produce exhaust gas and the like. Additionally, the fuel cells have such excellent characteristics such as to hardly make noise and to allow an energy recovery efficiency to improve as compared with other energy engines.

Types of fuel cells include those of a solid polymer electrolyte type, a phosphoric acid type, a molten carbonate type and a solid oxide type. A solid polymer electrolyte fuel cell or Polymer Electrolyte Fuel Cell (PEFC), one of the above, is such a cell as to be used in the presence of a polymer electrolyte membrane having a proton exchange group as an electrolyte in its molecules. The polymer electrolyte membrane is applied thereto since it functions as a proton-conducting electrolyte when saturated with water. The solid polymer electrolyte fuel cell is activated at relatively low temperatures and is high in electricity generation efficiency. Further, not only the solid polymer electrolyte fuel cell but also other accessory facilities are compact and lightweight so that the solid polymer electrolyte fuel cell for use in an electric vehicle or for other various uses is expected.

The solid polymer electrolyte fuel cell includes a fuel cell stack. The fuel cell stack is assembled by stacking a plurality of unit cells (each of which serves as a base unit in electricity generation due to electrochemical reactions), sandwiching both end portions of the unit cells with end flanges, and then pressingly holding it by a fastening bolt. Thus, the fuel cell stack is formed into a single-piece. A unit cell is comprised of a polymer electrolyte membrane, an anode (or hydrogen electrode) and a cathode (or oxygen electrode), which are respectively bonded to both sides of the membrane, and separators respectively disposed outside the hydrogen and oxygen electrodes.

A fuel cell separator performs a function of electrically connecting the unit cells with each other, and therefore is required to be excellent in electrical conductivity and to be low in contact resistance against components such as a gas diffusion layer.

Further, a solid polymer electrolyte membrane is formed of a polymer having a number of sulfonic acid groups and has a proton conductivity since it uses the wet state sulfonic acid groups as a proton exchange group. Further, as the solid polymer electrolyte membrane has strong acidity, the fuel cell separator is required to have a corrosion resistance against sulfuric acid having an acidity of about pH 2 to 3.

Moreover, the temperature of each gas supplied to the fuel cell is as high as 80 to 90°C. Additionally, H+ is generated in the hydrogen electrode. Further, the oxygen electrode, through which oxygen, air and the like pass, is in an oxidative environment where a potential of about 0.6 to 1 V vs SHE is applied. Therefore, similar to the oxygen and hydrogen electrodes, the fuel cell separator is required to have sufficient corrosion resistance to endure a strong acid atmosphere.

There have been attempts to use stainless steel or a titanium material such as industrial pure titanium as the fuel cell separator since they have good electrical conductivity and high corrosion resistance. Stainless steel has on its surface a closely-packed passive state film of oxide, hydroxide, hydrate of them or the like containing chromium as its main metallic element. Similarly, titanium has on its surface a closely-packed passive state film of titanium oxide, titanium hydroxide, hydrate thereof or the like. Therefore, stainless steel and titanium have good corrosion resistance.

However, the above-mentioned passive state film causes contact resistance with a carbon paper that is normally used as a gas diffusion layer. With regard to excessive voltage due to resistance polarization within a stationary type fuel cell, exhaust heat can be recovered by cogeneration or the like, so that heat efficiency is improved as a whole. However, as for a fuel cell for use in a vehicle, heat loss based on the contact resistance has to be exhausted to outside by a radiator through cooling water, which results in reduction of electricity generation efficiency when contact resistance is increased. Moreover, electric efficiency reduction is an equivalent to an increase in heat, and therefore there will be a need for providing a larger cooling system. Accordingly, an increase in contact resistance is an issue to be resolved.

In the fuel cell, a theoretical voltage per unit cell is 1.23 V. However, an actual voltage extracted is reduced due to reaction polarization, gas diffusion polarization and resistance polarization, and further is reduced as a current to be extracted is increased. Moreover, since higher power density per unit volume and weight are demanded in the fuel cell for vehicle use, the fuel cell is used at a higher current density, for example, a current density of 1 A/cm2, than the stationary type fuel cell. It is thus considered that, when a current density is 1 A/cm2, an efficiency decrease due to contact resistance between the separator and the carbon paper can be suppressed if the contact resistance is not larger than 40 mΩcm2.

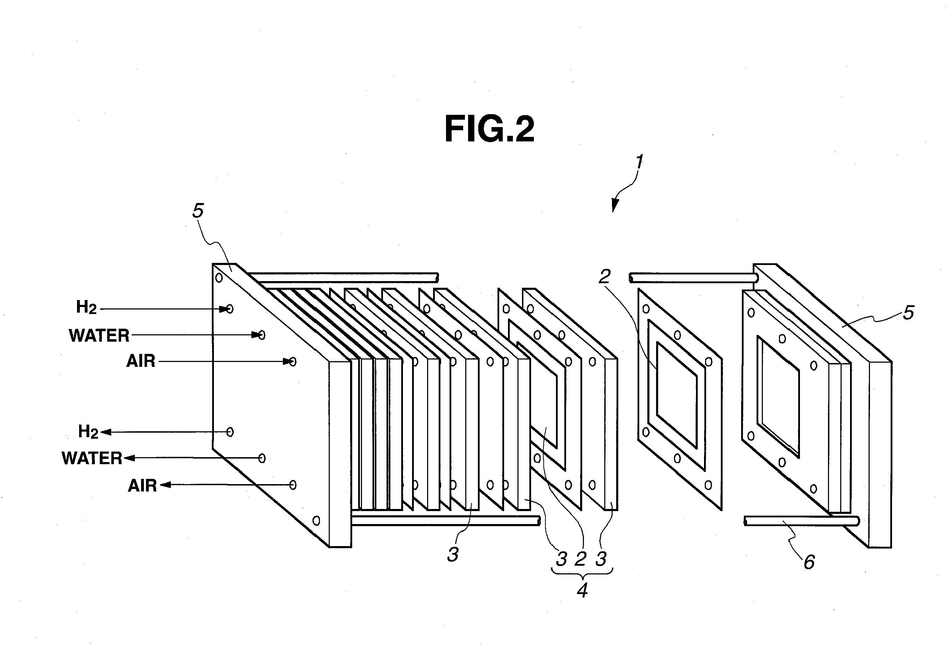

For this purpose, a fuel cell separator is proposed in Japanese Patent Provisional Publication No. 10-2289214, in which the separator is formed by carrying out press forming on stainless steel and then directly covering the surface to be contacted with an electrode with a gold-plated layer (see pg. 2 and FIG. 2). Additionally, another fuel cell separator is proposed in Japanese Patent Provisional Publication No. 2001-6713, in which, after stainless steel is formed and machined into the shape of the fuel cell separator, a passive state film on a surface that comes into contact with an electrode thereby producing contact resistance is removed, and then the surface is coated with noble metal or a noble metal alloy (see page 2).

It is an aim of the invention to address the problems highlighted above and to improve upon known technology. Embodiments of the invention may provide a fuel cell separator having improved corrosion resistance and electrical conductivity. Other aims and advantages of the invention will become apparent from the following description, claims and drawings.

Aspects of the invention therefore provide a transition metal nitride, a fuel cell separator, a method, a fuel cell stack and a vehicle as claimed in the appended claims.

According to another aspect of the invention there is provided a transition metal nitride comprising a first layer formed of a nitride of a stainless steel containing at least Fe and Cr and a second layer formed on the first layer and having an exposed surface, the second layer being formed of another nitride having contents of components that differ from those in the first layer, wherein the transition metal nitride has a composition distribution in which a Cr concentration is continuously changed from the first layer to the second layer in a thickness direction of these layers.

In an embodiment, an atom ratio of Cr to Fe in the second layer is larger than that in the first layer.

In an embodiment, the second layer has a thickness of no larger than 50 nm.

In an embodiment, the second layer includes a nitride compound having a continuously formed MN-type crystal structure, where M represents a transition metal element selected from the group consisting of Cr, Fe, Ni and Mo, the at least one transition metal element contained as a stainless steel component and where N represents nitrogen.

In an embodiment, the transition metal element is mainly Cr. The Cr may be distributed all over the second layer.

In an embodiment, the atom ratio of Cr to Fe in the second layer is within a range of 1.0 to 1.4.

In an embodiment, the first layer has a M₄N-type crystal structure where a nitrogen atom is located in an octahedral gap at a center of an unit cell of a face-centered cubic lattice formed of at least one transition metal atom selected from the group consisting of Fe, Cr, Ni and Mo.

The first layer may include a complex structure having a matrix of the M₄N-type crystal structure and a crystal layer of a ε-M₂₋₃N-type crystal structure, the crystal layer being formed in the matrix and having an interlayer distance of from several tens to several hundreds nm.

According to a further aspect of the invention, there is provided a fuel cell separator comprising a base layer formed of a stainless steel containing at least Fe and Cr, a nitride layer formed of the transition metal nitride as set out in any of the preceding paragraphs, the nitride layer being formed on the base layer, wherein an atom ratio of Cr to Fe in a second layer of the nitride layer is larger than that in the base layer and wherein the first layer of the transition metal nitride is directly connected to the base layer, a crystal lattice of the first layer is continuously connected to that of the base layer, a crystal orientation of the first layer is same as that of the base layer, and a crystal grain of the first layer is continuously connected to that of the base layer.

In an embodiment, the stainless steel includes an austenitic stainless steel having a Ni content of not less than 8 wt%.

In an embodiment, the stainless steel includes at least one austenitic stainless steel selected from the group consisting of SUS304, SUS316L and SUS310S.

According to a still further aspect of the invention there is provided a method comprising carrying out a plasma nitriding on a surface of a base material formed of a stainless steel containing at least Fe and Cr while holding the surface at a temperature of lower than 425°C, thereby forming a first layer and a second layer formed on and continuously connected to the first layer, the first layer having a M₄N type crystal structure where a nitrogen atom is located in an octahedral gap at a center of an unit cell of a face-centered cubic lattice formed of one transition metal atom selected from the group consisting of Fe, Cr, Ni and Mo, which are contained as components of stainless steel, and the second layer having a nitride compound including a MN type crystal structure, wherein M represents at least one transition metal element selected from the group consisting of Cr, Fe, Ni and Mo, and N represents nitrogen.

In an embodiment, the plasma nitriding is carried out by using a microwave pulse plasma power supply that is configured to repeat discharge and interruption of plasma in a cycle of 1 to 1000 µsec.

The method may comprise press-forming the base material to form a channel-like flow passage portion and a flat portion, a fluid used in a fuel cell being passable through the flow passage portion and the flat portion being formed adjacent to the flow passage portion.

According to another aspect of the invention there is provided a fuel cell stack comprising a plurality of fuel cell separators alternatively stacked with a plurality of membrane electrode assemblies, each fuel cell separator comprising, a base layer formed of stainless steel containing at least Fe and Cr, a nitride layer formed of the transition metal nitride as set out in the preceding paragraphs, the nitride layer being formed on the base layer, wherein an atom ratio of Cr to Fe in a second layer of the nitride layer is larger than that in the base layer and wherein the first layer of the transition metal nitride is directly connected to the base layer, a crystal lattice of the first layer is continuously connected to that of the base layer, a crystal orientation of the first layer is same as that of the base layer, and a crystal grain of the first layer is continuously connected to that of the base layer.

According to yet another aspect of the invention there is provided a fuel cell vehicle comprising a fuel cell stack as set out above, the fuel cell stack serving as a power source of the vehicle.

For example, a transition metal nitride taught herein may include a first layer formed of a nitride of a stainless steel containing at least Fe and Cr and a second layer formed on the first layer and having an exposed surface. In this example, the second layer being is formed of another nitride having contents of components that differ from those in the first layer. The transition metal nitride has a composition distribution in which a Cr concentration is continuously changed from the first layer to the second layer in a thickness direction of these layers.

In another example, a fuel separator may include a base layer formed of a stainless steel containing at least Fe and Cr and a nitride layer formed of a transition metal nitride as described above, the nitride layer being formed on the base layer. An atom ratio of Cr to Fe in a second layer of the nitride layer is larger than that in the base layer. Further, the first layer of the transition metal nitride can be directly connected to the base layer such that a crystal lattice of the first layer is continuously connected to that of the base layer. A crystal orientation of the first layer is same as that of the base layer, and a crystal grain of the first layer is continuously connected to that of the base layer.

In a still further example, a method may include carrying out plasma nitriding on a surface of a base material formed of a stainless steel containing at least Fe and Cr while holding the surface at a temperature of lower than 425°C, thereby forming a first layer and a second layer continuously connected to the first layer. The first layer has a M₄N type crystal structure where a nitrogen atom is located in an octahedral gap at a center of a unit cell of a face-centered cubic lattice formed of one transition metal atom selected from the group consisting of Fe, Cr, Ni and Mo, which are contained as stainless steel components. The second layer has a nitride compound including a MN type crystal structure. M represents at least one transition metal element selected from the group consisting of Cr, Fe, Ni and Mo, while N represents nitrogen.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
FIG. 1 is a perspective view showing the appearance of a fuel cell stack constructed of a fuel cell separator according to an embodiment of the invention;
FIG. 2 is a developed view of the fuel cell stack constructed of the fuel cell separator according to FIG. 1;
FIG. 3 is a schematic cross-sectional view showing a configuration of a unit cell which forms the fuel cell stack;
FIG. 4A is a schematic perspective view of the fuel cell separator;
FIG. 4B is a cross-sectional view taken along the plane indicated by lines lllb-lllb of FIG. 4A;
FIG. 4C is a cross-sectional view taken along the plane indicated by lines IIIc-IIIc of FIG. 4B;
FIG. 5 is a schematic view of a M₄N-type crystal structure included in a transition metal nitride according to an embodiment of the invention;
FIG. 6 is a schematic cross-sectional view of a nitriding apparatus used in a method for producing the fuel cell separator according to an embodiment of the invention;
FIGS. 7A and 7B are views showing the apparatus of an electric vehicle on which the fuel cell stack according to an embodiment of the invention is mounted, more specifically a side view and a top view of the electric vehicle, respectively;
FIG. 8 is a TEM photograph of a specimen obtained in an Example 1;
FIG. 9A is a magnification of a portion 71 a of FIG. 8;
FIG. 9B is a magnification of a portion 71 b of FIG. 8;
FIG. 10A shows a result of an EDS analysis conducted on a portion 71 c of the specimen obtained in Example 1; and
FIG. 10B shows a result of the EDS analysis conducted on the portion 71 b of the specimen obtained in Example 1.

Plating or coating the surface of the fuel cell separator with noble metal not only requires effort during manufacturing but also involves material costs. Moreover, the fuel cell is still required to have low contact resistance against the electrode and high corrosion resistance. The corrosion resistance required as discussed above means a durability where the fuel cell separator maintains an electrical conductive performance even in an oxidative environment at strong acidity. In other words, it is necessary to obtain corrosion resistance in an environment in which a cation is dissolved into humidifying water or generated water by a reaction of formula (2) discussed below.

According to the disclosure herein, a transition metal nitride low in contact resistance and excellent in corrosion resistance can be obtained. In addition, a fuel cell separator low in contact resistance and excellent in corrosion resistance can be obtained. Thus, a fuel cell separator and fuel cell stack high in performance can be obtained. Downsizing and cost reductions are also allowed.

When a fuel cell stack that achieves downsizing thereof and cost reduction is mounted, flexibility in styling can be ensured while increasing mileage.

A transition metal nitride, a fuel cell separator, a method for producing the fuel cell separator, a fuel cell stack, and a fuel cell vehicle, according to embodiments of the invention are discussed below by using an example where they are applied to a solid polymer fuel cell and another example where the solid polymer fuel cell is used.

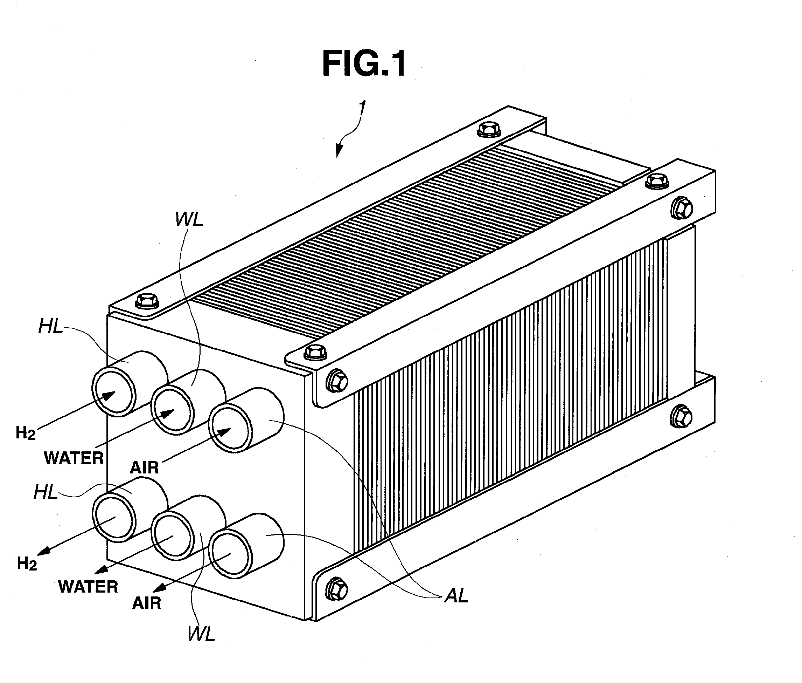

First discussed are a transition metal nitride, fuel cell and fuel cell separator. FIG. 1 is a perspective view showing the appearance of a fuel cell stack configured by using fuel cell separators according to an embodiment of the invention. FIG. 2 is a developed view of the fuel cell stack 1, schematically showing the configuration of the fuel cell stack 1 as shown in FIG. 1 in detail.

As shown in FIG. 2, the fuel cell stack 1 is configured by stacking a plurality of membrane electrode assemblies (MEA) 2 and fuel cell separators 3 alternately. The MEAs are formed by assembling a polymer electrolyte membrane, a hydrogen electrode and an oxygen electrode. One membrane electrode assembly 2 and fuel cell separators 3 disposed on both sides of the membrane electrode assembly 2 configure a unit cell 4 that serves as a base unit in electricity generation made by electrochemical reactions. The solid polymer electrolyte membrane may be a perfluorocarbon polymer membrane having sulfonic acid groups (product name: Nation1128® manufactured by DuPont Kabushiki Gaisya) or the like. After stacking the membrane electrode assembly 2 and the fuel cell separators 3, end flanges 5 are put at both ends, and then the circumferences thereof are fastened with fastening bolts 6, thereby constructing the fuel cell stack 1. Additionally, the fuel cell stack 1 is provided with hydrogen supply lines HL for supplying fuel gas containing hydrogen to each membrane electrode assembly 2. The fuel gas may be a hydrogen gas. The fuel cell stack 1 is further provided with air supply lines AL for supplying air as an oxidant, and with cooling water supply lines WL for supplying cooling water.

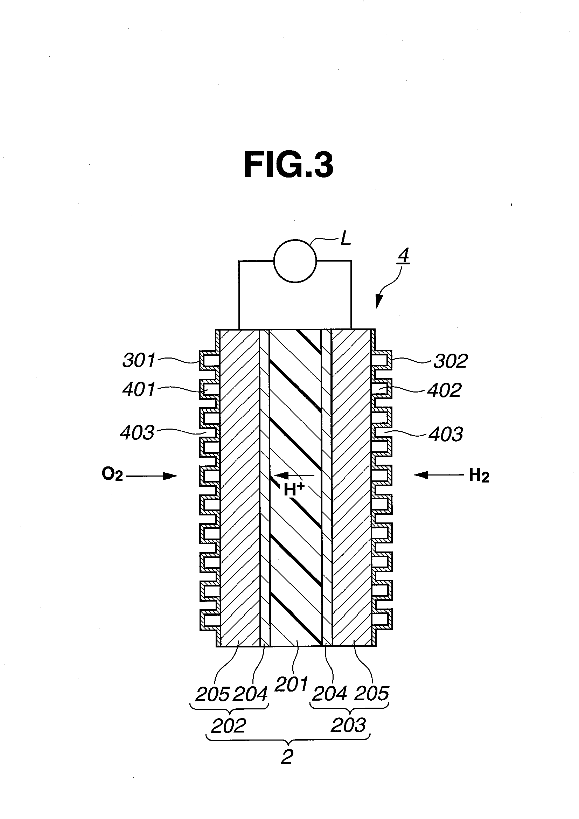

FIG. 3 is a cross-sectional view schematically showing a configuration of the unit cell that forms the fuel cell stack 1. As shown in FIG. 3, the unit cell 4 includes the membrane electrode assembly 2 formed by assembling an oxygen electrode 202 and a hydrogen electrode 203 on either sides of the solid polymer electrolyte membrane 201 and integrating them together. The oxygen electrode 202 and the hydrogen electrode 203 have a two-layer construction including a reaction membrane 204 and a gas diffusion layer (GDL) 205, the reaction membrane 204 being in contact with the polymer electrolyte membrane 201. An oxygen electrode side separator 301 and a hydrogen electrode side separator 302 are disposed on the oxygen electrode 202 and the hydrogen electrode 203, respectively, for stacking. An oxygen gas flow passage 401, a hydrogen gas flow passage 402 and a cooling water flow passage 403 are formed by the oxygen electrode side separator 301 and the hydrogen electrode side separator 302.

The unit cell 4 having the above construction is manufactured as follows. The oxygen electrode 202 and the hydrogen electrode 203 are disposed on both sides of the solid polymer electrode membrane 201, respectively. The oxygen electrode 202, hydrogen electrode 203 and membrane 201 are joined together, usually by hot pressing, thereby forming the membrane electrode assembly 2. Then, the separators 301 and 302 are disposed on opposing sides of the membrane electrode assembly 2.

Mixed gas of hydrogen, carbon dioxide, nitrogen and moisture vapor is supplied to the side of the hydrogen electrode 203 of a fuel cell configured by the above unit cells 4, and air and moisture vapor are supplied to the side of the oxygen electrode 202 of the same. Then, electrochemical reactions occur mainly on the contact surfaces between the polymer electrolyte membrane 201 and the reaction membranes 204. This reaction is described more specifically below.

Once oxygen gas and hydrogen gas are supplied respectively to the oxygen gas flow passage 401 and the hydrogen gas flow passage 402 in the unit cell 4, the oxygen gas and hydrogen gas are supplied to the reaction membranes 204 through each gas diffusion layer 205. The following reactions occur in each reaction membrane 204.

### Hydrogen electrode side: H2 → 2H+ + 2e- ; and (1)

Oxygen electrode side: (1/2)O2 + 2H+ + 2e- → H2O. (2)

As shown in FIG. 3, once hydrogen gas is supplied to the hydrogen electrode 203, the reaction of formula (1) progresses, and H+ and e- are produced. H+ moves within the solid polymer electrode membrane 201 in a state of containing water and then flows towards the oxygen electrode 202, while e- flows from the hydrogen electrode 203 to the oxygen electrode 202 through a load L. On the side of the oxygen electrode 202, H+, e- and the supplied oxygen gas completes the reaction of formula (2), thereby generating electric power.

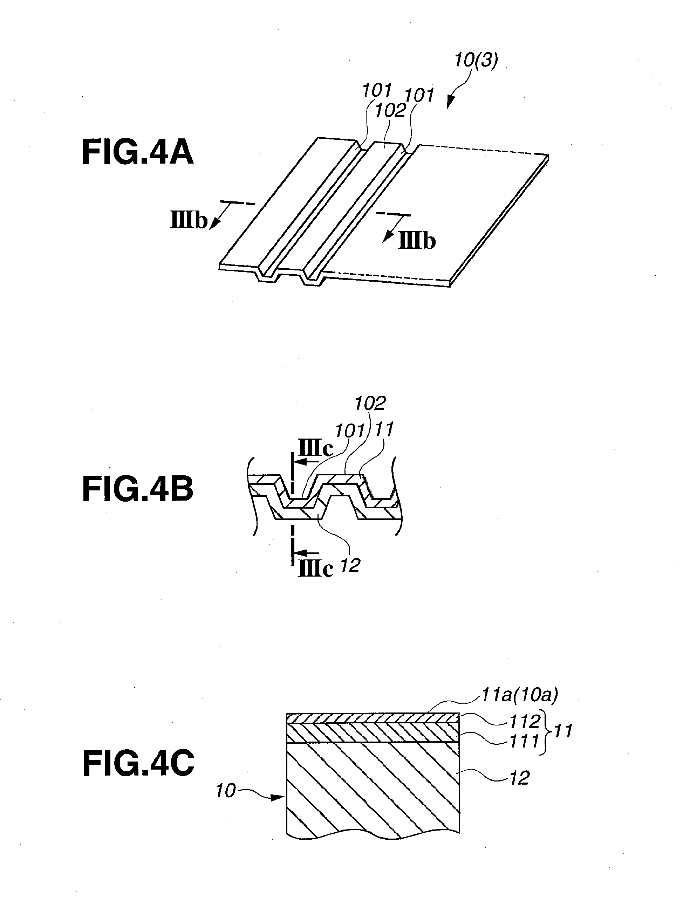

Referring now to FIG. 4, an example of a fuel cell separator is discussed specifically. FIG. 4A is a schematic perspective view of the fuel cell separator 10. FIG. 4B is a cross-sectional view taken along the line lllb-lllb for understanding a part of the fuel cell separator 10. FIG. 4C is a cross-sectional view taken along the line lllc-lllc for understanding another part of the fuel cell separator 10.

As shown in FIG. 4A, and more particularly in FIG. 4B and FIG. 4C, the fuel cell separator 10 is obtained by nitriding a surface of a base material of the fuel cell separator 10, the base material being formed of stainless steel containing at least one of Fe and Cr. Additionally, the fuel cell separator 10 is comprised of a nitride layer 11 formed of a transition metal nitride and formed in a depth direction from the surface of the base material and a base layer 12 or a not-yet-nitrided layer. Incidentally, for facilitating the understanding of the present invention, FIG. 4B and FIG. 4C differ from the actual fuel cell separator in terms of the thickness of the nitride layer 11 and the base layer 12. Therefore, the fuel cell separator 10 is not limited to the size of the illustrated nitride layer 11 and base layer 12, or to the ratio of both.

As shown in FIG. 4A, the fuel cell separator 10 is formed with a plurality of passage portions 101 having a rectangular shape in cross section. The passage portions 101 are portions that form the oxygen gas flow passage 401 or the hydrogen gas flow passage 402 of the unit cell 4, and they are formed by press-forming or the like. The fuel cell separator 10 has a flat portion 102 between the passage portions 101 adjacent to each other, the flat portion 102 performing the function of connecting the passage portions 101 to each other. The fuel cell separator 10 of this embodiment shown in FIG. 4B is provided with the nitride layer 11 extending along the outer surface of the passage portions 101 and the flat portion 102. The flat portion 102 is to be brought into contact with the gas diffusion layer of the membrane electrode assembly 2 when the fuel cell separators 3 and the membrane electrode assembly 2 are stacked alternately.

As shown in the schematic cross-sectional view of FIG. 4C, the nitride layer 11 formed of transition metal nitride is provided with a first nitride layer (a first layer) 111 formed on the base layer 12 and a second nitride layer 112 continuously formed on the first nitride layer 111. The nitride layer 11 has a surface portion 11 a that is an exposed surface of the nitride layer 11. The surface portion 11 a of the nitride layer 11 is subjected to plasma nitriding, so that nitrogen is embedded in the fuel cell separator 10 from a surface 10a thereof in a depth direction thereof.

The first nitride layer 111 of the nitride layer 11, serving as a transition metal nitride, is formed of nitride of the base material made of stainless steel. The second nitride layer 112 is formed of nitride that differs from that of the first nitride layer 111 in content of the components. The fuel cell separator 10 has such a composition distribution that Cr concentrations are continuously changed from the first layer to the second layer in thickness direction thereof. With this, the nitride layer 11 is excellent in corrosion resistance while maintaining a low contact resistance required to the fuel cell separator. Therefore, a fuel cell separator excellent in corrosion resistance and low in cost can be obtained.

An atom ratio of Cr to Fe in the second nitride layer 112 is larger than that in the first nitride layer 111. Further, in this embodiment, an atom ratio of Cr to Fe in the second nitride layer 112 is larger than that in the base layer 12. Furthermore, the second nitride layer 112 discussed in this embodiment has a thickness of less than 50 nm.

The fuel cell separator 10 according to the embodiment includes the base layer 12 having the same component composition as the base material formed of a stainless steel containing at least Fe and Cr and the nitride layer 11 formed of a transition metal nitride and formed on the base layer 12. The nitride layer 11 includes the first nitride layer 111 formed on the base layer 12 and serving as the first layer and the second nitride layer 112 having the surface portion 11 a of the nitride layer 11 and serving as the second layer. Since an atom ratio of Cr to Fe in the second nitride layer 112 is larger than that in the first nitride layer 111 and the base layer 12, a passive state film is easily formed so as to cover the whole of the outermost surface of the second nitride layer. With this, a fuel cell separator excellent in corrosion resistance is obtained at a low cost.

Specifically, the second nitride layer 112 is formed on the first nitride layer 111 and includes the surface portion 11a of the nitride layer 11, as discussed above. Additionally, an atom ratio of Cr to Fe in the second nitride layer 112 is larger than that in the first nitride layer 111 and the base layer 12. The second nitride layer 112 is separated from the base layer 12 by the first nitride layer 111. When the second nitride layer 112 is formed on the first nitride layer 111 and when an atom ratio of Cr to Fe in the second nitride layer 112 is larger than that in the first nitride layer 111 and the base layer 12, Cr is concentrated in the passive state film, thereby decreasing the thickness of the passive state film. Therefore, potential of the passive state film shifts to a nobler side, thereby obtaining the effect of improving corrosion resistance.

In certain embodiments, the second nitride layer has a thickness of less than 50 nm, which improves corrosion resistance in an oxidative environment. When the second nitride layer 112 is not formed, the first nitride layer serves as the outermost surface. Therefore, the ratio of Fe in the passive state film is increased so as to make Cr difficult to be concentrated, thereby reducing corrosion resistance. Meanwhile, when the second nitride layer 112 has a thickness exceeding 50 nm, the increased thickness of the second nitride layer 112 lowers a Cr concentration of the first nitride layer 111 and the base layer 12 to bring about a Cr deficient layer. The Cr deficient layer degrades corrosion resistance.

In some advantageous embodiments, the second nitride layer is formed with a single layer nitride compound having a MN type crystal structure. M is a transition metal element selected from the group consisting of Cr, Fe, Ni and Mo, but mainly including at least Cr. The group is contained as stainless steel components in the base layer 12. The second nitride layer 112 formed with the single layer nitride compound having the MN type crystal structure causes Cr to be concentrated in the passive state film. With this, potential of the passive state film shifts to a nobler side, thereby obtaining the effect of improving corrosion resistance.

In some advantageous embodiments, Cr is distributed all over the second nitride layer 112 so as not to bring about the Cr deficient layer. In these embodiments, the second nitride layer 112 mainly contains CrN and is formed with the nitride compound single layer including at least one transition metal element such as Fe, Ni and Mo. CrN itself is known to exhibit a high corrosion resistance. However, when Cr is singly deposited on the second nitride layer 112 by nitriding or the like, a Cr concentration in the base layer 12 is so reduced as to bring about the Cr deficient layer, which degrades corrosion resistance. When a plurality of CrN layers are formed to cover the base layer 12 by coating or the like, a cohesion strength between the base layer 12 and the CrN layer is not enough. Moreover, defects tend to occur in a CrN layer film, thereby degrading corrosion resistance.

Meanwhile, when an extremely thin nitride layer mainly formed of CrN and having a thickness of 1 to 50 nm is formed on the nitride layer 11 by nitriding, particularly by plasma nitriding, conformity is improved between the first and second nitride layers 111 and 112 and between the first nitride layer 111 and the base layer 12 without reducing the Cr concentration in the base layer 12 to bring about the Cr deficient layer.

Accordingly, a defect such as Luder's lines is not shown so as not to break the metallic bond. Therefore, the cohesion strength between the layers is ensured.

The second nitride layer 112 can have a ratio (atom ratio) of Cr to Fe of not smaller than 1.0. In this case, the second nitride layer 112 is formed having a Cr-based oxide film on its outermost surface. Then, a standard electric potential shifts to a nobler side, thereby further improving corrosion resistance in a strong acid atmosphere of pH 2 to 3. However, a ratio of Cr to Fe is advantageously not larger than 1.4, since a ratio of Cr not smaller than 1.0 may reduce a Cr concentration in the base layer 12 to bring about the Cr deficient layer and thereby degrade corrosion resistance.

The stainless steel used as the base material and serving as the base layer 12 of the fuel cell separator 10 is a stainless steel containing at least Fe and Cr. For certain embodiments, austenitic stainless steel containing at least 8 wt% or more of Ni is advantageous. An example of austenitic stainless steel containing at least 8 wt% or more of Ni includes SUS304L, SUS316L and SUS310S. The reason for selecting austenitic stainless steel is its excellent press-formability. In a case where austenitic stainless steel is used as the base material of the fuel cell separator 3, it is necessary to press-form the base material in order to form projections and depressions such as the gas flow passage and the cooling water flow passage. When the base material structure is single-phase austenite as in the above case, it is excellent in ductility, drawability and press-formability. Additionally, in a case where plasma nitriding is made on the base material or austenite as single-phase, the amount of nitrogen solid solution on a surface of the base material is so increased that a transition metal nitride containing high concentration nitrogen is easily formed on the surface of the base material by plasma nitriding. In a case where the base material is ferritic or martensitic stainless steel having a Ni content of less than 8 wt% or having no Ni, ductility, drawability and press-formability are lowered.

In a case where the base material contains Mo, Mo has an effect of thinly forming the passive state film over the whole surface of the nitride layer, so as to suppress metal ions from eluting while making good electrical conductivity.

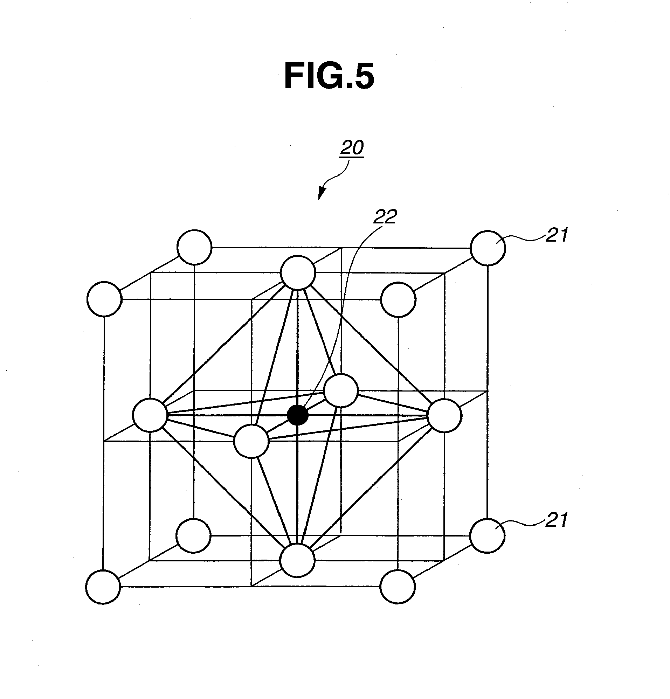

The first nitride layer 111 of the transition metal nitride and the fuel cell separator may have a M₄N-type crystal structure where a nitrogen atom is located in the octahedral gap at the center of the unit cell of a face-centered cubic lattice formed of transition metal atom selected from the group consisting of Fe, Cr, Ni and Mo. The M₄N-type crystal structure is shown in FIG. 5. As shown in FIG. 5, a M₄N-type crystal structure 20 is a structure where a nitrogen atom 22 is located in the octahedral gap of at the center of the unit cell of a face-centered cubic lattice formed of transition metal atoms 21 selected from Fe, Cr, Ni and Mo. In this M₄N-type crystal structure 20, M represents transition metal atoms 21 selected from Fr, Cr, Ni and Mo, while N represents the nitrogen atom 22. The nitrogen atom 22 occupies a fourth of the octahedral gap of the M₄N-type crystal structure 20. In other words, the M₄N-type crystal structure 20 is an interstitial solid solution in which the nitrogen atom 22 is interstitially present in the octahedral gap at the center of the unit cell of a face-centered cubic lattice formed of transition metal atoms 21. When expressed in a space lattice of a cubic crystal, the nitrogen atom 22 is located in a lattice coordinate (1/2, 1/2, 1/2) of each unit cell. Further, in the M₄N-type crystal structure, the transition metal atoms 21 include an alloy in which Fe is partially substituted by other transition metal atoms such as Cr, Ni and Mo, though the transition metal atoms 21 are comprised almost exclusively of Fe. The M₄N-type crystal structure realizes strong covalent bond between transition metal atoms 21 and the nitrogen atom 22 while maintaining metallic bond among the transition metal atoms 21, thereby lowering reactivity against oxidation of each transition metal atom. Therefore, the first nitride layer 111 having the M₄N-type crystal structure 20 provides a fuel cell separator 10 that is excellent in corrosion resistance even in an oxidative environment within the fuel cell and achieves cost reduction.

In certain advantageous embodiments, the transition metal atoms 21 are mainly Fe but may include an alloy obtained by partially substituting atoms of other transitional metals such as Cr, Ni or Mo for Fe. Also, the transition metal atoms 21 constructing the M₄N-type crystal structure can be in an irregular arrangement. With an irregular arrangement, partial molar free energy of each transition metal atom is reduced, thus reducing an activity of each transition metal atom. With this, reactivity within the nitride layer 14 to oxidation of each transition metal atom is also reduced, and the first nitride layer 111 thus stays chemically stable even in an oxidative environment within the fuel cell. Furthermore, since the separator 10 becomes excellent in corrosion resistance, durability is also improved. Additionally, corrosion resistance is maintained without forming a noble metal plating layer on the separator 3 serving as the contact surface against the electrode, thereby achieving cost reduction. In these embodiments, the transition metal atoms 21 are increased in mixing entropy with the irregular arrangement, or each transition metal atom may have an activity that is lower than a value estimated based upon Raoult's law.

In the M₄N-type crystal structure 20, in a case where the atom ratio of Cr to Fe is high, nitrogen contained in the nitride layer is bonded to Cr in the nitride layer 111 and Cr-based nitride such as CrN. In other words, the NaCl-type nitride compound becomes a main component. Then, there arises a fear of lowering a Cr concentration in the base layer 12 to bring about a Cr deficient layer. This Cr deficient layer degrades corrosion resistance, thereby lowering corrosion resistance of the first nitride layer 111. Hence, in certain advantageous embodiments, the transition metal atoms 21 are mainly Fe. This type of crystal structure is considered to be a nitride having the fcc or fct structure with high-density transition and twin crystal, high hardness of not less than 1000 HV, and supersaturated nitrogen solid solution (Yasumaru and Kamachi, Journal of Japan Institute of Metals, 50, pp. 362-368, 1986). The closer to the surface, the higher the concentration of nitrogen becomes, and additionally, CrN does not become a main component. Accordingly, Cr, which is effective for corrosion resistance, is not reduced while corrosion resistance is thus maintained even after nitriding. Where the first nitride layer 111 has the M₄N-type crystal structure 20 where an N atom is located in the octahedral gap at the center of the unit cell of a face-centered cubic lattice formed of at least one of metal atoms selected from Fe, Cr, Ni and Mo, corrosion resistance is further improved, and contact resistance between the separator and the electrode becomes even, in a strong acid atmosphere of pH 2 to 3.

The first nitride layer 111 is a complex structure including a matrix of the M₄N-type crystal structure 20 and the crystal layers of the ε-M₂₋₃N-type hexagonal crystal structure formed within the matrix and referred to as a ε-phase. The crystal layers have an interlayer distance within a range of from several tens to several hundreds nm. Chemical stability of the first nitride layer 111 is ensured with the complex structure in which the M₂₋₃N-type hexagonal crystal structure is included in the matrix of the M₄N-type crystal structure. Additionally, in a case where the first nitride layer 111 has an interlayer distance between the layers within a range of from several tens to several hundreds nm, a laminated-structure finely formed at nanometer level is bought into a two-phase equilibrium. With this, free energy is lowered so as to lower activity, so that the first nitride layer 111 becomes low in reactivity to oxidation to have chemical stability. Therefore, it comes to suppress oxidation and to improve corrosion resistance particularly in a strong acidity atmosphere.

A fuel cell separator described herein comprises the base layer 12 consisting of stainless steel containing at least Fe and Cr and the nitride layer 11 formed of transition metal nitride and formed on the base layer 12 as previously described. The first nitride layer 111 of the nitride layer 11 formed of transition metal nitride and is directly connected to the base layer 12. Additionally, the crystal lattice of the first nitride layer 111 is continued to that of the base layer 12. The crystal orientations are the same, and the crystal grains are in a row. Such a structure is obtained by plasma nitriding the surface of the base material formed of stainless steel. Between the first nitride layer 111 of the nitride layer 11 and the base layer 12, the crystal lattice is in a row, the crystal orientation is the same, and the crystal grains are in a row. Accordingly, the first nitride layer 111 of the nitride layer 11 and the base layer 12 are in conformity to make strong covalent bonds. With this, the nitride layer 11 becomes difficult to be peeled from the base layer 12.

Thus, the above-discussed arrangement is applied to the transition metal nitride and fuel cell separator separators taught herein, thereby improving corrosion resistance in the fuel cell separator. Additionally, it becomes possible to obtain a fuel cell separator achieving cost reduction. Moreover, the fuel cell stack according to certain embodiments includes the fuel cell separator according, so as to maintain high electricity generation efficiency without any loss of electricity generation performance while achieving downsizing and cost reduction.

Next discussed is the method for producing the transition metal nitride and fuel cell separator.

In a method for producing a transition metal nitride and a method for producing a fuel cell separator, a plasma nitriding is carried out on a surface of a base material formed of a stainless steel containing at least Fe and Cr while holding the surface at a temperature less than 425°C, thereby forming a first nitride layer (or a first layer) and a second nitride layer (or a second layer) formed on the first nitride layer. The first nitride layer has at least a M₄N type crystal structure where a nitrogen atom is located in an octahedral gap at a center of a unit cell of a face-centered cubic lattice formed of at least one transition metal atom selected from the group consisting of Fe, Cr, Ni and Mo, which are contained as stainless steel components. The second nitride layer has a nitride compound having a M₄N type crystal structure that continues to the first nitride layer. By the way, M is at least one transition metal atom selected from the group consisting of Fe, Cr, Ni and Mo.

With this method, the transition metal nitride, including the first and second layers, can be easily obtained. Additionally, there can be obtained a fuel cell separator including a base layer formed of a base material of stainless steel containing at least one atom selected from the group consisting of Fe, Cr, Ni and Mo, and a nitride layer formed on the base layer. The nitride layer includes a first nitride layer formed on the base layer and a second nitride layer formed on the first nitride layer and having a surface portion of the nitride layer. The atom ratio of Cr to Fe contained in the second nitride layer can be is larger than the atom ratio of Cr to Fe contained in the first nitride layer and the base layer. A fuel cell separator whose second nitride layer has a thickness of not higher than, for example, 50 nm can be easily obtained.

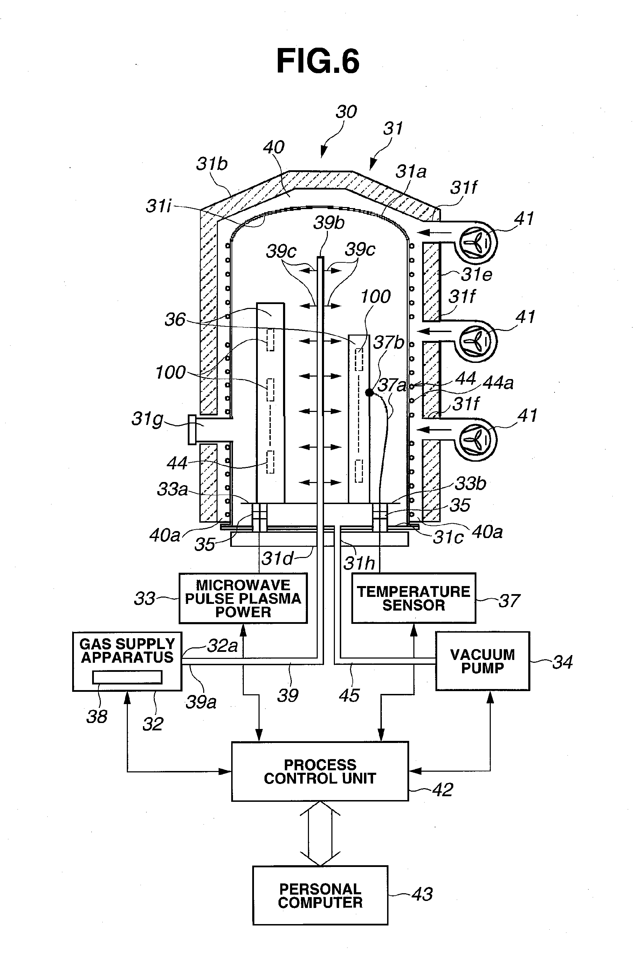

In plasma nitriding, an object to be nitrided is set as a cathode. As described herein, the object is a stainless steel foil. A part of gas component is ionized by glow discharge, i.e., low-temperature non-equilibrium plasma produced by application of a direct current voltage. Then, the ionized gas component within non-equilibrium plasma collides at a very fast rate with the surface of the object to be nitrided, thus the object is nitrided. FIG. 6 is a schematic cross-sectional view of an example of a nitriding apparatus 30 used in methods for producing a transition metal nitride and methods for producing a fuel cell separator as described.

A nitriding apparatus 30 includes a nitriding batch furnace 31, a vacuum pump 34 discharging gas from a vacuum nitriding container 31 a disposed in the nitriding furnace 31, a gas supply apparatus 32 supplying gas to the vacuum nitriding container 31 a, plasma electrodes 33a and 33b charged to high voltage in order to generate plasma within the vacuum nitriding container 31 a, a microwave pulse plasma power 33 supplying direct currents converted to pulses of a high frequency of 45 kHz to the electrodes 33a and 33b, and a temperature sensor 37 detecting temperature within the vacuum nitriding furnace 31.

The nitriding furnace 31 has an air vent valve and insulating outer container 31 b formed of insulating material and housing the vacuum nitriding container 31 a therein.

The vacuum nitriding container 31 a has an insulator 35 at its bottom 31 c for holding the plasma electrodes 33a and 33b at high potential. The plasma electrodes 33a and 33b include thereon supporters 36 formed of stainless steel. The supporters 36 support a base material 100 formed of stainless steel foil. The base material 100 is provided by press-forming with a channel-like flow passage portion through which fuel or oxidant pass and with a flat portion, and the base material is machined to be shaped into a separator.

The gas supply apparatus 32 has a gas chamber 38 and a gas supply path 39, and the gas chamber 38 is provided with openings (not shown). The openings respectively communicate with a hydrogen gas supply line (not shown), a nitrogen gas supply line (not shown) and an argon gas supply line (not shown), each of which is provided with a gas supply valve (not shown). The gas supply apparatus 32 further has a gas supply opening 32a communicating with one end 39a of the gas supply path 39, the opening 32a being provided with a gas supply valve (not shown). The gas supply path 29 extends into the vacuum nitriding container 31a in such a manner as to hermetically pass through a bottom 31d of the outer container 31b of the nitriding furnace 31 and the bottom 31 c of the vacuum nitriding container 31a, thereby reaching a standing portion 39 that stands vertically. The standing portion 39 has a plurality of openings 39c for ejecting gas into the vacuum nitriding container 31a.

A pressure of gas within the vacuum nitriding container 31a is detected by a gas pressure sensor (not shown) provided at the bottom 31c of the vacuum nitriding container 31a. The vacuum nitriding container 31a is heated by a lead wire 44a of a heater 44 of induction-type or resistance-type, the lead wire 44a being wound around the periphery of the vacuum nitriding container 31a. The vacuum nitriding container 31 a and the outer container 31 b define air flow passage 40 therebetween. The outer container 31 b includes at its side wall 31 e an air blower 41 for blowing air flown into the air flow passage 40 from an opening 31f of the side wall 31e of the outer container 31b. The air flow passage 40 has an opening 40a through which air flows out thereof.

In the vacuum nitriding container 31a, discharging is achieved with a discharge pipe 45 communicating with an opening 31h in the bottom 31c of the vacuum nitriding container 31a.

A temperature detector 37 passes through the vacuum nitriding container 31a, the bottoms 31c and 31d of the outer container 31 b and the plasma electrodes 33a and 33b, thereby being connected to a temperature sensor 37b (such as a thermocouple) through a signal path 37a.

The microwave pulse plasma power 33 is turned on and off by receiving control signals from a process control unit 42. A potential difference between each base material 100 and a ground side object (e.g. an inner wall 31i of the vacuum nitriding container 31a) equates to a voltage supplied by the microwave pulse plasma power 33.

The gas supply apparatus 32, the vacuum pump 34, the temperature detector 37 and the gas pressure sensor are also controlled by the process control unit 42. The process control unit 42 can be, for example, a microprocessor including a central processing unit (CPU), input and output ports (I/O), random access memory (RAM), keep alive memory (KAM), a common data bus and read-only memory (ROM) as an electronic storage medium for executable programs and certain stored values. The process control unit 42 is controlled by a personal computer 43.

Plasma nitriding employed in this embodiment is now discussed more specifically. First of all, the base material 100 serving as an object to be treated is disposed within the vacuum nitriding container 31a. Then, the furnace is vacuated to be less than 1 Torr (=133 Pa). Mixed gas of hydrogen and argon is introduced into the vacuum nitriding container 31 a, and then voltage is applied thereto at the degree of vacuum (=665 to 2128 Pa) in a state where the base material 100 is a cathode while the inner wall 31i of the vacuum nitriding container 31a is an anode. In this case, a glow discharge occurs on the base material 100. With the glow discharge, the base material 100 is heated and nitrided.

As a first operation of the method for producing the fuel cell separator or the transition metal nitride according to this embodiment, a spatter cleaning is carried out in order to remove a passive state film made on the surface of the base material 100 formed of stainless steel foil. During the spatter cleaning, hydrogen ions, argon ions and the like ionized by the introduced gas collide with the surface of the base material 100, thereby removing oxide film made on the base material 100. Here, the oxide film is mainly Cr.

In a second operation carried out after the spatter cleaning, mixed gas of hydrogen and nitrogen is introduced into the nitriding furnace 31. Then voltage is applied thereto, thereby making the glow discharge on the base material 100 that serves as the cathode.

At this time, ionized nitrogen collides with and breaks into the surface of the base material 100 and then diffuses into the base material 100. This forms a first nitride layer including the M₄N-type crystal structure on the surface of the base material 100 and a second nitride layer including the MN-type crystal structure on the surface of the first nitride layer. Concurrently with formation of the nitride layer, the oxide film formed on the surface of the base material 100 is removed with a reduction reaction in which ionized hydrogen reacts with oxygen present on the surface of the base material 100.

In plasma nitriding, the reaction that occurs on the surface of the base material 100 is not an equilibrium reaction but a non-equilibrium reaction, which allows rapid formation of the transition metal nitride including a M₄N-type cubic crystal structure having a high nitrogen concentration. The nitride is formed from the surface of the base material 100 in a depth direction and has sufficient corrosion resistance and electrical conductivity.

As described herein, a microwave pulse plasma power is employed as a power supply. A power supply commonly used for plasma nitriding is a direct-current power supply, not the microwave pulse plasma power. In the direct-current power supply, direct voltage is applied and then a discharged waveform current is detected by a current detector and controlled by a thyristor to be a certain current. In this common power supply, glow discharge is continued, and the temperature of the base material is changed within a range of plus or minus 30°C when measured by a radiation thermometer. Meanwhile, the microwave pulse plasma power is comprised of a high-frequency interrupting circuit in the presence of direct current and the thyristor. With this circuit, the waveform of direct current becomes a pulse waveform in which glow discharge repeats on and off. In this case, when plasma nitriding in the use of the microwave pulse plasma power that repeats discharging and interrupting is carried out in such a manner as to set times for discharging plasma and for interrupting plasma to 1 to 1000 µsec, temperature variation of the base material is within a range of plus or minus about 50°C. In order to obtain such a transition metal nitride as to have a high nitrogen concentration, an accurate temperature control is required. For this reason, in certain embodiments of the invention, a microwave pulse plasma power having little temperature variation of the base material is used. The power can repeat the plasma discharge and interruption in a cycle of 1 to 1000 µsec.

Nitriding can be carried out while maintaining the surface of the base material at a temperature of 425°C. When nitriding was carried out on the surface of the stainless steel at high temperatures, nitrogen is to be bonded to Cr contained in the base material to deposit CrN and the like including a NaCl-type crystal structure having such a high Cr concentration as to bring about a Cr deficient layer in the base layer or the nitride layer, thereby degrading the separator in corrosion resistance. Meanwhile, when nitriding was carried out at a temperature lower than 425°C, there is formed on the surface of the base layer not the nitride compound, such as CrN including the NaCl-type crystal structure, but a nitride layer mainly having the M₄N-type crystal structure. Concurrently with this, nitrogen ions are embedded in the base material from the outermost surface due to plasma heating in a state where Cr contained in the base layer is concentrated at the surface, thereby forming a CrN layer of a nanometer order on the outermost surface of the base material. With this, a separator whose corrosion resistance is improved is obtained. Moreover, there can be obtained at a low cost a fuel cell whose electricity generation efficiency is maintained and whose reliability in durability is excellent.

When a temperature during nitriding is lower than 300°C, it becomes difficult to concentrate Cr to form the CrN layer of the nanometer order on the outermost surface, while productivity is reduced since it takes a long period of time to obtain such a nitride layer as to have the M₄N-type crystal structure. Therefore, nitriding is carried out, but is not limited to be so performed, within a temperature range of from 300 to 425°C. In certain embodiments, the first nitride layer is a complex structure including a matrix of the M₄N-type crystal structure and a crystal layer of the ε-M₂₋₃N-type crystal structure (referred to as a ε-phase), the crystal layer being formed in the matrix and having an interlayer distance within a range of from several tens to several hundreds nm. A nitride compound single layer including the MN-type crystal structure is formed in the second nitride layer. Further, it is beneficial to carry out nitriding at a temperature within a range of from 380 to 420°C when the first nitride layer has a thickness of less than 50 nm.

The method for producing the fuel cell separator can include a step of making press-forming on the base material to form a flow passage portion and a flat portion adjacent thereto, the flow passage portion serving as a path of fuel or oxidant. Though the step may be taken after or before nitriding, it is more advantageously carried out before nitriding in certain embodiments. In this case, any defect such as cracks is not made on the nitride layer.

According to a method for producing transition metal nitride of the present embodiment, a transition metal nitride high in corrosion resistance and low in contact resistance is obtained. Further, methods for producing a fuel cell separator according to embodiments of the invention produce a fuel cell separator excellent in durability. Electricity generation performance is obtained by plasma nitriding. This facilitates production of a high-performance fuel cell and allows reduction of the production cost.

As an example of a fuel cell vehicle according to an embodiment of the invention, there is next discussed a fuel cell electric vehicle that has as its power source the fuel cell stack 1 according to the above-mentioned embodiments.

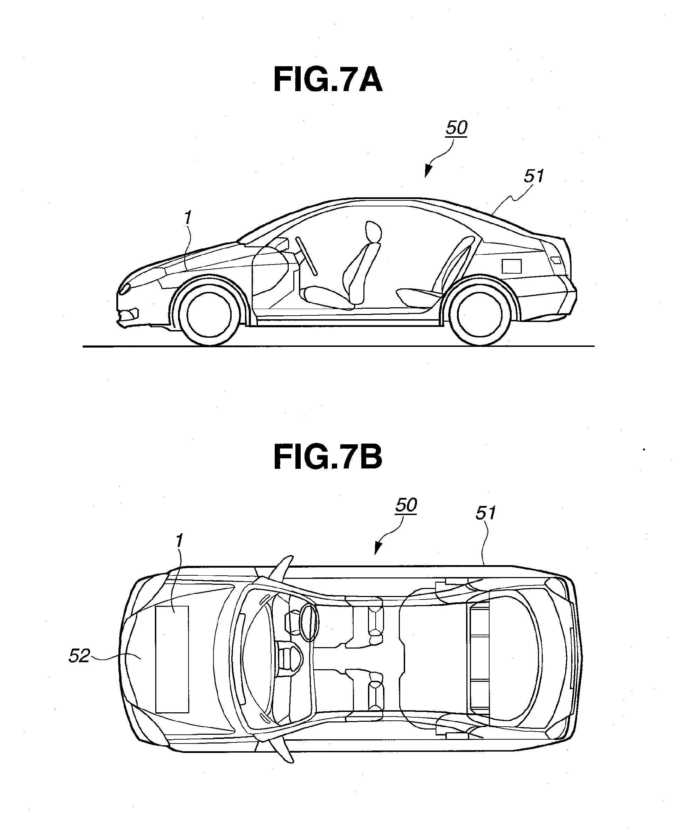

An appearance of a fuel cell electric vehicle 50 on which the fuel cell stack 1 is mounted is shown wherein FIG. 7A is a side view of the fuel cell electric vehicle 50, and FIG. 7B is a top view of the fuel cell electric vehicle 50. As shown in FIG. 7B, an engine compartment 52 is formed at the front of a vehicle 51 by combining and welding front side members and hood ridges on the right and left sides, as well as a dash lower member, which connects the right and left hood ridges (including the front side members) to each other. In the fuel cell electric vehicle 50 as shown in FIGS. 7A and 7B, the fuel cell stack 1 is mounted in the engine compartment 52. By mounting on a mobile vehicle such as an automotive vehicle the fuel cell stack 1 containing fuel cell separators according to teachings herein that has good power generation efficiency, an improvement of fuel efficiency of the fuel cell electric vehicle 50 can be achieved. Moreover, by mounting the small-sized and light-weighted fuel cell stack 1 on the vehicle, the vehicle weight can be reduced to save fuel and to deliver more mileage. Furthermore, by mounting the small-sized fuel cell on the mobile vehicle or the like as a power source, the usable interior space of the vehicle becomes wider, thereby securing design freedom.

Though an electric vehicle is described as an example of the fuel cell vehicle, the present invention is not limited to such and can be applied to engines of an aircraft and the like that require electric energy.

Hereinafter are discussed Examples 1 to 5, Comparative Examples 1 and 2 and Reference Example 1 of a transition metal nitride and a fuel cell separator according to certain embodiments of the invention. Each example is discussed for examining effectiveness of the transition metal nitrides and the fuel cell separators taught herein. These were prepared by treating each specimen under a condition different from a row material. The invention is not limited to these examples.

First, preparation of specimens is described. In each of the Examples, Comparative Examples and Reference Example, vacuum annealing materials thickness 0.1 mm and width 100×100 mm of Japan Industrial Standards (JIS)-accredited SUS304L (18Cr-9Ni-low C), SUS316L (18Cr-12Ni-2Mo-low C), SUS310S (25Cr-20Ni-low C) were used as a base material upon being subjected to press-forming to be shaped into a separator. After degreasing the press-formed materials shaped into the separator, plasma nitriding was carried out by glow discharge on both sides of the press-formed materials shaped into the separator using microwave pulse direct-current. As for the plasma nitriding conditions, nitriding temperature was 380 to 450°C, nitriding time was 60 minutes, gas mixing ratio in nitriding was N₂:H₂ = 7:3, and a processing pressure was 3 Torr (or 399 Pa). Note that plasma nitriding was not performed in Comparative Example 1. In Comparative Examples 2 and 3, the vacuum annealing materials, which were press-formed to be shaped into a separator, were subjected to plasma nitriding by using direct-current glow discharge. Table 1 shows the types of steel used as the base materials, the chemical composition, whether or not plasma nitriding was performed, the plasma power supplies used and base material temperatures during nitriding.

**TABLE 1**

| | Base Material | Chemical Composition (wt%) | | | Plasma Nitriding | Plasma Power Supply | Base Material Temperature during Nitriding (°C) |
|---|---|---|---|---|---|---|---|
| | | Ni | Cr | Mo | | | |
| Example 1 | SUS304L | 9 | 18 | 0 | done | microwave pulse | 400 |
| Example 2 | SUS316L | 12 | 18 | 2.5 | done | microwave pulse | 400 |
| Example 3 | SUS310S | 20 | 25 | 0 | done | microwave pulse | 400 |
| Example 4 | SUS310S | 20 | 25 | 0 | done | microwave pulse | 425 |
| Example 5 | SUS310S | 20 | 25 | 0 | done | microwave pulse | 380 |
| Comparative Example 1 | SUS310S | 20 | 25 | 0 | not done | - | - |
| Comparative Example 2 | SUS310S | 20 | 25 | 0 | done | direct current | 350 |
| Reference Example 1 | SUS310S | 20 | 25 | 0 | done | direct current | 425 |

Each of the thus obtained specimens was evaluated in the following method.

First discussed is the observation of the nitride layer, including the measurement and thickness of the nitride layer.

As a specimen to be observed with a transmission electron microscope, a thin layer specimen was prepared in the vicinity of a surface of a nitride layer obtained in each of Examples 1 to 5, Comparative Examples 1 and 2 and Reference Example 1. A focused ion beam (FIB) available from Hitachi, Ltd. under the trade name of FB2000A was used as an apparatus in the preparation. The specimen was prepared by employing a FIB-µ sampling method. This specimen was observed by using a field emission transmission electron microscope (available from Hitachi, Ltd. under the trade name of HF-2000) at 200kV.

Identification of the crystal structure of the nitride layer was carried out by using the field emission transmission electron microscope (available from Hitachi, Ltd. under the trade name of HF-2000), an EDS analyzer at an acceleration voltage of 200kV and a µ-diffraction electron diffraction.

Measurement of ratio of Cr to Fe was carried out by using a field emission transmission electron microscope (available from Hitachi, Ltd. under the trade name of HF-2000), an EDS analyzer at an acceleration voltage of 200kV and a µ-diffraction electron diffraction.

Next discussed is the evaluation of corrosion resistance. In a fuel cell, an electric potential of about 1 V vs SHE at the maximum is applied to an oxygen electrode side in comparison with a hydrogen electrode side. In addition, a solid polymer electrolyte membrane exhibits proton conductivity by saturating a polymer electrolyte membrane having a proton exchange group such as a sulfonic acid group within a molecule, and exhibits strong acidity. Therefore, corrosion resistance was evaluated by constant-potential electrolysis testing, which is an electrochemical method where the specimen is measured in terms of an amount of metallic ion elution within an aqueous solution by using an inductively coupled plasma mass spectrometer (ICP-MS), upon being held for a certain period of time while applying predetermined constant electric potential thereto.

From the value of the amount of metallic ion elution, the degree of corrosion resistance reduction was evaluated. More specifically, a specimen was prepared by cutting the center of each specimen to have a size of 30 mmx30 mm. The thus prepared specimen was then held for 100 hours in a sulfuric acid aqueous solution of pH 2, at temperature of 80°C and at electric potential of 1 V vs SHE. Thereafter, amounts of ion elution of Fe, Cr and Ni were measured by the inductively coupled plasma mass spectrometer (ICP-MS).

Table 2 shows, concerning Examples 1 to 5, Comparative Examples 1 and 2 and Reference Example 1, the thickness of the second nitride layer, crystal structures of the first and second nitride layers and the base layer and ratio of Cr to Fe in the first and second nitride layers and the base layer. Measurement results of the amount of ion elution obtained in the corrosion resistance test are shown in Table 3.

**TABLE 2**

| | Thickness of Second Nitride Layer | Crystal Structure | | | Ratio of Cr to Fe | | |
|---|---|---|---|---|---|---|---|
| | nm | Second Nitride Layer | First Nitride Layer | Base Layer | Second Nitride Layer | First Nitride Layer | Base Layer |
| Example 1 | 5 | MN | M₄N | Y | 1.05 | 0.32 | 0.24 |
| Example 2 | 12 | MN | M₄N+M₂₋₃N | Y | 1.15 | 0.38 | 0.31 |
| Example 3 | 28 | MN | M₄N+M₂₋₃N | Y | 1.25 | 0.45 | 0.61 |
| Example 4 | 45 | MN | M₄N+M₂₋₃N | Y | 1.40 | 0.50 | 0.52 |
| Example 5 | 6 | MN | M₄N+M₂₋₃N | Y | 1.10 | 0.36 | 0.3 |
| Comparative Example 1 | - | none | None | Y | | | 0.45 |
| Comparative Example 2 | none | none | M₄N | Y | | 0.46 | 0.6 |
| Reference Example 1 | none | none | M₄N⁺M₂₋₃N | Y | | 0.49 | 0.58 |

**TABLE 3**

| | Amount of Ion Elution (ppm) | | |
|---|---|---|---|
| | Fe | Cr | Ni |
| Example 1 | 0.9 | 0.13 | 0.14 |
| Example 2 | 0.7 | 0.10 | 0.13 |
| Example 3 | 0.6 | 0.07 | 0.08 |
| Example 4 | 0.8 | 0.08 | 0.07 |
| Example 5 | 0.7 | 0.06 | 0.05 |
| Comparative Example 1 | 5.4 | 0.87 | 0.84 |
| Comparative Example 2 | 1.8 | 0.17 | 0.38 |
| Reference Example 1 | 1.2 | 0.15 | 0.29 |

In Comparative Example 1, the crystal structure formed on the surface of the specimen was y crystal structure, and additionally the nitride layer was not formed on the surface of the separator. Therefore, in such a strong acidic environment as pH 2 and in an excessive passive state region to which potential of 1 V vs SHE is applied, a passive state film formed on the specimen surface was ripped to increase an amount of metallic ion elution, thereby reducing corrosion resistance.

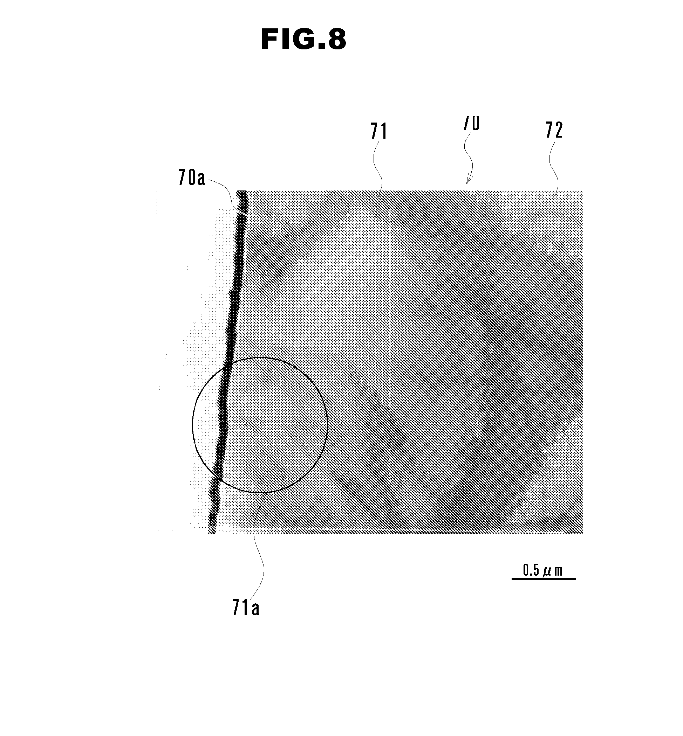

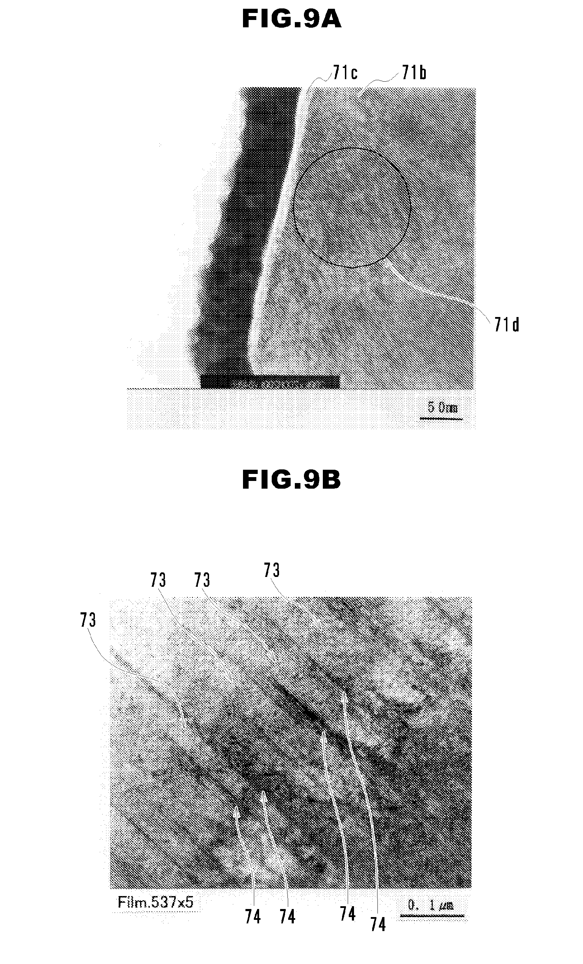

Regarding each specimen obtained in Examples 1 to 5, the second nitride layer showed the MN-type crystal structure having a thickness of 5 to 45 nm. Examples 2 to 5 had a complex structure in which a M₂₋₃N type deposition was deposited on the M₄N matrix at several tens to several hundreds of intervals to serve as the first nitride layer below the second nitride layer. In Example 1, a M₄N-type single layer was formed below the second nitride layer. FIG. 8 is a TEM photograph of the oxygen electrode side separator obtained in Example 1, scaled up 30000 times. FIG. 9A is a magnification of a portion 71 a shown in FIG. 8, scaled up 200000 times. FIG. 9B is a magnification of a portion 71 d shown in FIG. 9A, scaled up 200000 times. As shown in FIG. 8, a nitride layer 71 is formed in a depth direction of a surface 70a of a base material 70 by plasma nitriding carried out on the surface 70a of a stainless steel 70 used as the base material, thereby forming a base layer 72 immediately below the nitride layer 71, the base layer 72 serving as a not-yet-nitrided layer. As shown in FIG. 9, the nitride layer 71 is comprised of a first nitride layer 71b and a second nitride layer 71c. There was observed in the second nitride layer 71c a two phase complex structure in which layer structures are alternately arranged, which were found to be a matrix 73 having a M₄N type crystal structure that appears to be white in FIG. 9A, and to be a crystal layer 74 having a layered M₂₋₃N type crystal structure that appears to be dark in FIG. 9B and being formed within the matrix 74. An interlayer distance between the crystal layer 74 and the crystal layer 74 was within a range of from several tens to several hundreds nm. It was also found that the first nitride layer was directly connected to the base layer and that a crystal lattice of the first layer was continuously connected to that of the base layer. Further, a crystal orientation of the first layer was found to be the same as that of the base layer. A crystal grain of the first layer was found to be continuously connected to that of the base layer.

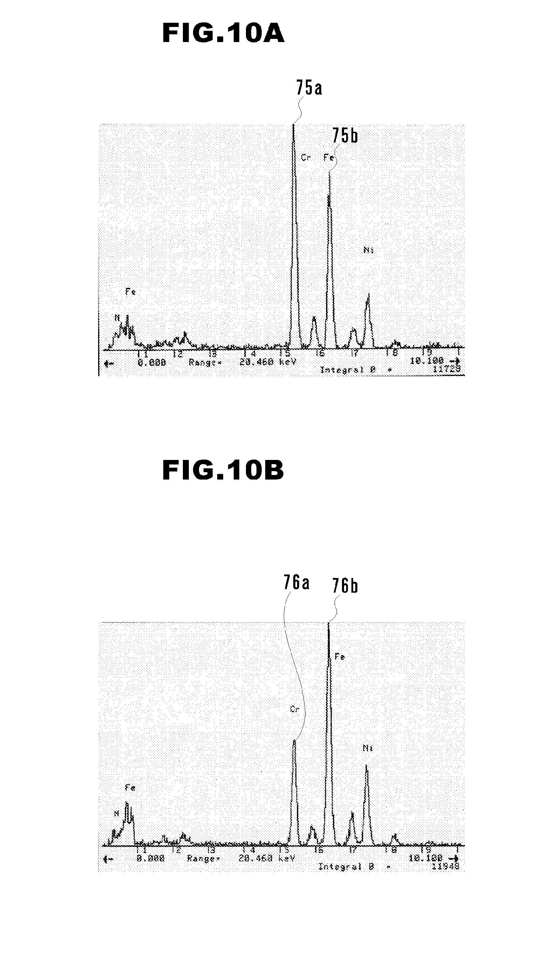

FIG. 10A shows results of EDS analysis conducted on the second nitride layer portion 71c of the specimen obtained in Example 1. FIG. 10B results of EDS analysis conducted on the first nitride layer portion 71b of the specimen obtained in Example 1. As shown in FIG. 10A, the strength ratio of a peak 75a of Cr to a peak 75b of Fe showed that a ratio of Cr to Fe was 1.05 in the portion 71c (or the second nitride layer) of the specimen obtained in Example 1. Additionally, as shown in FIG. 10B, the strength ratio of a peak 76a of Cr to a peak 76b of Fe showed that a ratio of Cr to Fe was 0.32 in the portion 71 b (or the first nitride layer) of the specimen obtained in Example 1.

In Examples 1 to 5, an atomic ratio of Cr to Fe was within a range of from 1 to 1.4. Therefore, an amount of ion elution was low as compared with that of Comparative Example 1, and corrosion resistance was excellent. Without being bound by any theory, the reason why each specimen of Examples 1 to 5 is thus excellent in electrochemical stability in an oxidative environment and excellent in corrosion resistance is that the MN-type nitride compound formed on an outermost layer covers the whole of the surface. The MN-type nitride compound layer serving as the outermost layer is thin so as to stably form the first nitride layer without reducing a Cr concentration of the base material. With this, the M₄N type crystal structure maintains metallic bonds among the transition metal atoms and exhibits a strong covalent bond between transition metal atom and the nitrogen atom. Additionally, it is considered that the transition metal atoms constructing a face-centered cubic lattice are irregularly mixed so as to lower an activity to reduce partial molar free energy of each transition metal composition.

Since any of Examples 1 to 5 is excellent in corrosion resistance, a separator to which the specimen of Examples 1 to 5 is applied is excellent in electricity generation performance and allows the fuel cell stack to be downsized and to be reduced in cost.

However, the specimen of Comparative Example 2 has the first nitride layer including the M₄N type crystal structure but does not have the second nitride layer. Accordingly, an amount of ion elution is lower than Comparative Example 1 but larger than Examples 1 to 5. Further, the specimen of Reference Example 1 has the matrix of the M₄N type crystal structure and the first nitride layer, including the complex structure that contains the crystal layer of the ε-M₂₋₃N-type crystal structure, but does not have the second nitride layer though it has the nitride layer on the surface of the separator. Accordingly, an amount of ion elution is lower than Comparative Example 1 but larger than Examples 1 to 5.

A comparison of Examples 1 to 5 and Comparative Example 2 and Reference Example 1 makes it clear that Examples 1 to 5 having the second nitride layer on the surface portion of the nitride layer are excellent in corrosion resistance.

Subsequently, examples of a fuel cell separator are discussed. The second nitride layer of the nitride layer of the fuel cell separator has a thickness different from that in Examples 1 to 5.

In Examples 6 to 9, vacuum annealing materials thickness 0.1 mm and width 100x100 mm of JIS-accredited SUS316L (18Cr-12Ni-2Mo-low C), SUS310S (25Cr-20Ni-low C) and SUS410L were used as a base material upon being subjected to press-forming to be shaped into a separator. After degreasing the press-formed materials shaped into the separator, plasma nitriding was carried out by common direct-current on both sides of the press-formed materials shaped into the separator. As for the plasma nitriding conditions, nitriding temperature was 380 to 450°C, nitriding time was 60 minutes, gas mixing ratio in nitriding was N₂:H₂ = 7:3, and a processing pressure was 3 Torr (or 399 Pa). Table 4 shows the types of steel used as the base materials, the chemical composition, whether or not plasma nitriding was performed, type of plasma power supply used and base material temperatures during nitriding.

**TABLE 4**

| | Base Material | Chemical Composition (wt%) | | | Plasma Nitriding | Plasma Power Supply | Base Material Temperature during Nitriding (°C) |
|---|---|---|---|---|---|---|---|
| | | Ni | Cr | Mo | | | |
| Example 6 | SUS310S | 20 | 25 | 0 | done | direct current | 425 |
| Example 7 | SUS310S | 20 | 25 | 0 | done | direct current | 450 |
| Example 8 | SUS410L | 0 | 12 | 0 | done | direct current | 450 |
| Example 9 | SUS316L | 12 | 18 | 2.5 | done | direct current | 450 |

Each of the thus obtained specimens was evaluated in the same method as Examples 1 to 5. Table 5 shows, for Examples 6 to 9, the thickness of the second nitride layer, crystal structures of the first and second nitride layers and the base layer and the ratio of Cr to Fe in the first and second nitride layers and the base layer. Measurement results of the amount of ion elution obtained in the corrosion resistance test are shown in Table 6.

**TABLE 5**

| | Thickness of Second Nitride Layer | Crystal Structure | | | Ratio of Cr to Fe | | |
|---|---|---|---|---|---|---|---|
| | nm | Second Nitride Layer | First Nitride Layer | Base Layer | Second Nitride Layer | First Nitride Layer | Base Layer |
| Example 6 | 78 | MN | M₄N+M₂₋₃N | Y | 1.58 | 0.32 | 0.43 |
| Example 7 | 120 | MN | M₄N+M₂₋₃N | Y | 1.62 | 0.28 | 0.36 |
| Example 8 | 55 | MN | M₄N | Y | 0.26 | 0.12 | 0.14 |
| Example 9 | 62 | MN | M₄N+M₂₋₃N | Y | 1.52 | 0.27 | 0.29 |

**TABLE 6**

| | Amount of Ion Elution (ppm) | | |
|---|---|---|---|
| | Fe | Cr | Ni |
| Example 6 | 7.2 | 0.91 | 0.92 |
| Example 7 | 7.8 | 1.05 | 1.02 |
| Example 8 | 9.4 | 0.12 | 0.00 |
| Example 9 | 8.3 | 1.13 | 1.01 |

The specimens obtained in Examples 6 to 9 were formed with the first and second layers on the base layer and were excellent in corrosion resistance since the second nitride layer includes the MN type crystal structure. However, in Examples 6 to 7 and 9, the second nitride layer had a thickness exceeding 50 nm. Further, the ratio of Cr to Fe in the first nitride layer and the base layer was reduced. An amount of metallic ion elution was increased while corrosion resistance was decreased as compared with Examples 1 to 5. The reason is considered to be that Cr serving as a corrosion resistance-improving element contained in stainless steel is concentrated in the nitride layer so that a Cr concentration is reduced at an interface between the base layer and the nitride layer to bring about a Cr deficient layer thereby degrading the base layer in corrosion resistance. In Example 8, ferritic stainless steel was used as the base material so that a ratio of Cr to Fe becomes low in the base layer and the first and second layers. Particularly on the surface of the second nitride layer, the passive state film becomes difficult to be formed so that the amount of metallic ion elution was increased to lower corrosion resistance as compared with Examples 1 to 5.

Depth profile by Auger electron spectroscopic analysis was conducted on the specimens of Examples 1 to 5 and Examples 6 to 9 over a range from the surface of the nitride layer to a depth of 200 nm. With this testing, the nitride layer of the specimen of Examples 1 to 5 and Examples 6 to 9 was found to have a composition distribution in which a Cr concentration is continuously changed from the first nitride layer to the second nitride layer in a thickness direction of these layers.

The above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application Nos. 2006-227674, filed 24th August 2006, and 2007-141024, filed 28th May 2007, the contents of which are expressly incorporated herein by reference.

## Claims

1. A transition metal nitride comprising:
a first layer formed of a nitride of a stainless steel containing at least Fe and Cr; and
a second layer formed on the first layer and having an exposed surface, the second layer being formed of another nitride having a different composition from that of the first layer;
wherein the transition metal nitride has a composition distribution in which a Cr concentration is continuously changed from the first layer to the second layer in a thickness direction of the layers.

2. A transition metal nitride as claimed in claim 1, wherein an atom ratio of Cr to Fe in the second layer is larger than that in the first layer.

3. A transition metal nitride as claimed in claim 1 or claim 2, wherein the second layer has a thickness of 50 nm or less.

4. A transition metal nitride as claimed in any preceding claim, wherein the second layer includes a nitride compound having a continuously formed MN-type crystal structure;
wherein M represents a transition metal element selected from the group consisting of Cr, Fe, Ni and Mo, the at least one transition metal element being contained as a stainless steel component; and
wherein N represents nitrogen.

5. A transition metal nitride as claimed in claim 4, wherein the transition metal element is mainly Cr.

6. A transition metal nitride according to any preceding claim, wherein the atom ratio of Cr to Fe in the second layer is within a range of 1.0 to 1.4.

7. A transition metal nitride as claimed in any preceding claim, wherein the first layer has a M₄N-type crystal structure where a nitrogen atom is located in an octahedral gap at a center of an unit cell of a face-centered cubic lattice formed of at least one transition metal atom selected from the group consisting of Fe, Cr, Ni and Mo.

8. A transition metal nitride as claimed in claim 7, wherein the first layer includes a complex structure having a matrix of the M₄N-type crystal structure and a crystal layer of a ε-M₂₋₃N-type crystal structure, the crystal layer being formed in the matrix and having an interlayer distance of from several tens to several hundreds nm.

9. A fuel cell separator comprising:
a base layer formed of a stainless steel containing at least Fe and Cr; and
a nitride layer formed of a transition metal nitride as claimed in any preceding claim, the nitride layer being formed on the base layer;
wherein an atom ratio of Cr to Fe in a second layer of the nitride layer is larger than that in the base layer; and
wherein the first layer of the transition metal nitride is directly connected to the base layer, a crystal lattice of the first layer is continuously connected to that of the base layer, a crystal orientation of the first layer is same as that of the base layer, and a crystal grain of the first layer is continuously connected to that of the base layer.

10. A fuel cell separator as claimed in claim 9, wherein the stainless steel includes an austenitic stainless steel having a Ni content of not less than 8 wt%.

11. A method comprising carrying out a plasma nitriding on a surface of a base material formed of a stainless steel containing at least Fe and Cr while holding the surface at a temperature of lower than 425°C, thereby forming a first layer and a second layer formed on and continuously connected to the first layer, the first layer having a M₄N type crystal structure where a nitrogen atom is located in an octahedral gap at a center of an unit cell of a face-centered cubic lattice formed of one transition metal atom selected from the group consisting of Fe, Cr, Ni and Mo, which are contained as components of stainless steel, and the second layer having a nitride compound including a MN type crystal structure;
wherein M represents at least one transition metal element selected from the group consisting of Cr, Fe, Ni and Mo, and N represents nitrogen.

12. A method as claimed in claim 11, comprising press-forming the base material to form a channel-like flow passage portion and a flat portion, a fluid used in a fuel cell being passable through the flow passage portion and the flat portion being formed adjacent to the flow passage portion.

13. A method as claimed in claim 11 or claim 12 wherein the plasma nitriding is carried out by using a microwave pulse plasma power supply that is configured to repeat discharge and interruption of plasma in a cycle of 1 to 1000 µsec.

14. A fuel cell stack comprising a plurality of fuel cell separators as claimed in claim 9 or claim 10 alternatively stacked with a plurality of membrane electrode assemblies.

15. A vehicle having a fuel cell stack as claimed in claim 14
